# FASCICULE DE BREVET EUROPEEN

(11) **EP 2 136 161 B1**
(45) Date de publication et mention de la délivrance du brevet: **11.09.2019**
(21) Numéro de dépôt: 09162899.0
(22) Date de dépôt: 17.06.2009
(51) Int. Cl.: F25B 41/00, F25D 16/00, B60H 1/00, B60H 1/32

(54) **Installation de chauffage, ventilation et/ou climatisation à stockage de froid**
Anlage zur Beheizung, Belüftung und/oder Klimatisierung mit Kühllagerung
Heating, ventilation and/or air-conditioning installation with cold storage

(30) Priorité: 19.06.2008 FR 0803441
(43) Date de publication de la demande: 23.12.2009
(73) Titulaire: Valeo Systèmes Thermiques, 78321 Le Mesnil Saint Denis (FR)
(72) Inventeur: Labaste Mauhe, Laurent, 92140, Clamart (FR); Haller, Regine, 78490, Boissy sans Avoir (FR); Delaforge, Laurent, 78125, Orcemont (FR); Thuez, Jean-Luc, 78112, Fourqueux (FR); Taklanti, Abdelmajid, 91190, Gif sur Yvette (FR); Cheng, Thierry, 78280, Guyancourt (FR); Morvan, Kevin, 66000, Perpignan (FR); Lecollier, Marie, 78300, Poissy (FR)
(74) Mandataire: Metz, Gaëlle

(56) Documents cités:
- WO-A-2005/039903
- DE-A1- 10 224 754
- FR-A- 2 866 831
- JP-A- 2005 271 906
- US-A1- 2003 159 455
- US-A1- 2004 211 199

## Description

La présente invention concerne une installation de chauffage, ventilation et/ou climatisation et, en particulier les installations de chauffage, ventilation et/ou climatisation permettant un stockage de froid.

L'invention trouve une application dans le domaine des installations de chauffage, ventilation et/ou climatisation pour des véhicules automobiles à moteur thermique. Plus spécialement, l'invention trouve une application particulièrement avantageuse dans le domaine des installations de chauffage, ventilation et/ou climatisation pour des véhicules automobiles équipés d'un système d'arrêt et de redémarrage automatique du moteur thermique. Une telle configuration de véhicules automobiles est également connue sous l'appellation anglo-saxonne de "Stop & Start".

Les installations de chauffage, ventilation et/ou climatisation comportent une boucle thermodynamique de climatisation comprenant, de manière habituelle, un compresseur destiné à comprimer et faire circuler un fluide réfrigérant, généralement un composé fluoré tel que celui désigné sous l'appellation R134a. Le compresseur est entraîné par le moteur thermique du véhicule au moyen d'une courroie reliée à l'arbre du moteur. Le fluide réfrigérant en phase gazeuse haute pression traverse ensuite un condenseur et échange de la chaleur avec de l'air ambiant provenant directement de la face avant du véhicule et/ou d'un ventilateur. En sortie du condenseur, le fluide réfrigérant se trouve en phase liquide haute pression. Puis, un organe de détente, en particulier un détendeur, permet de réduire la pression et la température du fluide réfrigérant en phase liquide. Le fluide réfrigérant traverse ensuite un évaporateur dans lequel il échange de la chaleur avec l'air destiné au traitement thermique de l'habitacle du véhicule. Pour ce faire, l'évaporation du réfrigérant à basse température nécessite un apport d'énergie qui est fourni par l'air traversant l'évaporateur. L'air destiné au traitement thermique de l'habitacle du véhicule est ainsi refroidi. Par ailleurs, le fluide réfrigérant est vaporisé, au moins partiellement sous basse pression. Il est alors introduit en phase gazeuse dans le compresseur pour parcourir à nouveau la boucle thermodynamique de climatisation.

Du fait de la liaison mécanique entre le compresseur et le moteur thermique, on comprend bien évidemment que ces installations de chauffage, ventilation et/ou climatisation ne peuvent fonctionner que si le moteur thermique est en fonctionnement, la boucle thermodynamique de climatisation étant stoppée lorsque le moteur est à l'arrêt.

Or, avec la généralisation actuelle des motorisations hybrides dans les véhicules automobiles, les situations où le moteur thermique est arrêté tendent à se multiplier avec les conséquences négatives qui en résultent sur le confort des passagers. Le confort de l'habitacle est détérioré à chaque fois que le moteur thermique du véhicule s'arrête et les sentiments d'inconfort peuvent se faire ressentir soit par une sensation de chaleur ou une sensation de froid.

L'invention vise à remédier aux problèmes précités. Elle vise plus particulièrement les cas de micro hybridation illustrés notamment par le système "Stop & Start" où le moteur thermique s'arrête lorsque le véhicule est à l'arrêt sur des durées relativement courtes et au cours desquelles il est souhaitable de maintenir le confort des passagers en assurant la continuité de fonctionnement de l'installation de chauffage, ventilation et/ou climatisation.

Une première solution à ce problème consiste à utiliser des évaporateurs-stockeurs tels que ceux décrits dans les demandes de brevet français FR2847973 et FR2878613. Les évaporateurs-stockeurs contiennent un matériau à changement de phase (PCM) apte à modifier son état lors du fonctionnement normal de la boucle thermodynamique de climatisation. Par ce changement de phase, le matériau à changement de phase permet donc de stocker de l'énergie calorifique sous forme de chaleur latente de solidification ou de changement de phase. Cette énergie calorifique est restituée sous forme de froid à l'air de climatisation lorsque le compresseur est hors fonctionnement suite à l'arrêt du moteur thermique, le matériau à changement de phase revenant à son état initial en libérant les calories stockées. Les matériaux à changement de phase les plus classiquement utilisés sont des paraffines, dont le point de fusion se situe, par exemple, entre 5 et 12°C.

Cette technologie des évaporareurs-stockeurs présente cependant un certain nombre d'inconvénients.

On notera en particulier que l'autonomie de ces dispositifs est relativement réduite, généralement inférieure à 1 min, du fait que la quantité de matériau à changement de phase embarqué est limitée par l'espace alloué dans le volume intérieur de l'évaporateur et par l'espace alloué à l'installation de chauffage, ventilation et/ou climatisation dans le véhicule. Or, cet espace est de plus en plus restreint par les constructeurs automobiles.

Un autre inconvénient réside dans l'augmentation de la perte de charge sur le circuit de circulation de l'air de climatisation. Les tubes des évaporateurs-stockeurs étant plus larges que ceux des évaporateurs classiques, il en résulte une diminution de la section de passage d'air qui ne peut être compensée que par l'utilisation d'un groupe moto-ventilateur plus puissant. Un tel composant est plus cher et est un consommateur d'énergie électrique plus important.

Enfin, il faut également signaler que l'utilisation d'évaporateurs-stockeurs pour assurer la fonction de climatisation se répercute sur l'architecture de l'appareil de chauffage, ventilation et/ou climatisation intégrant les composants de l'installation de chauffage, ventilation et/ou climatisation.

De plus, la tendance actuelle tend à une certaine standardisation de l'architecture des appareils de chauffage, ventilation et/ou climatisation, des installations de chauffage, ventilation et/ou climatisation et des composants qui y sont intégrés. L'utilisation d'un évaporateur-stockeur pour une partie d'une plateforme de véhicules implique donc une perte en terme de standardisation et une multiplication des références d'appareil de chauffage, ventilation et/ou climatisation et des installations de chauffage, ventilation et/ou climatisation.

Pour remédier à ces inconvénients, on a recours aujourd'hui à une deuxième solution qui repose sur une séparation des fonctions d'évaporation et de stockage du froid, et par la mise en place de deux boucles thermodynamiques de climatisation. On dispose donc, d'une part, d'une boucle thermodynamique principale classique permettant de générer des frigories dans un évaporateur lorsque le compresseur fonctionne, et, d'autre part, une boucle secondaire permettant de stocker ces frigories dans un échangeur de chaleur à stockage de froid et de les restituer en refroidissant l'évaporateur à partir du froid stocké dans l'échangeur de chaleur à stockage de froid lorsque le compresseur est à l'arrêt. Une telle installation est notamment connue de la demande de brevet français FR2861163.

Il est par ailleurs également connu une installation de chauffage, ventilation et/ou climatisation à double boucle dans lequel une boucle thermodynamique principale de climatisation comprend, outre les composants habituels d'une installation de chauffage, ventilation et/ou climatisation, un échangeur de chaleur à stockage de froid disposé en série avec l'évaporateur en aval de l'organe de détente. Au cours du cycle thermodynamique de compression/détente le fluide réfrigérant circulant dans la boucle thermodynamique principale est amené à refroidir successivement le matériau de changement de phase de l'échangeur de chaleur à stockage de froid, et l'air de climatisation à travers l'évaporateur. Puis, lorsque le compresseur est à l'arrêt, une boucle thermodynamique secondaire est mise en oeuvre. La boucle thermodynamique secondaire comprend l'échangeur de chaleur à stockage de froid, l'évaporateur et une pompe de circulation. Lorsqu'il parcourt la boucle thermodynamique secondaire, le fluide réfrigérant se refroidit au contact du matériau de changement de phase, lequel libère alors l'énergie calorifique qu'il a stockée, et traverse l'évaporateur pour refroidir l'air de climatisation, ceci dans la limite de la chaleur latente de solidification emmagasinée dans le matériau à changement de phase. Les documents DE102 24 754 A1 et FR 28 66 831 A décrivent de telles installations comportant des échangeurs de chaleur à stockage de froid.

La demande de brevet français FR2836421 décrit également une telle installation.

Dans cette installation de chauffage, ventilation et/ou climatisation à double boucle connue, la boucle thermodynamique secondaire est constituée de deux branches raccordées en parallèle sur la boucle thermodynamique principale. Une première branche comprenant la pompe de circulation est placée entre la sortie de l'échangeur de chaleur à stockage de froid et l'entrée de l'évaporateur, et une deuxième branche comprenant une première soupape est placée entre la sortie de l'évaporateur et l'entrée de l'échangeur de chaleur à stockage de froid. De plus, une deuxième soupape est également disposée dans la boucle principale entre l'échangeur de chaleur à stockage de froid et l'évaporateur. Les soupapes sont configurées de manière que, lorsque le compresseur fonctionne, la première soupape soit fermée et la seconde soupape soit ouverte, tandis que, lorsque le compresseur est à l'arrêt, la deuxième soupape soit fermée et la première soupape soit ouverte.

On peut constater que cette installation de chauffage, ventilation et/ou climatisation décrit dans la demande de brevet français FR2836421 présente une certaine complexité liée à la présence de deux branches en parallèle sur la boucle thermodynamique principale pour réaliser la seconde boucle thermodynamique de climatisation, et de deux soupapes qu'il faut parfaitement étalonner pour permettre un fonctionnement correct de l'installation, que le compresseur soit en marche ou à l'arrêt.

Aussi, un but de l'invention est de proposer une installation de chauffage, ventilation et/ou climatisation à deux boucles thermodynamiques de climatisation qui serait de réalisation plus simple.

Ce but est atteint, conformément à l'invention, grâce à une installation de chauffage, ventilation et/ou climatisation ayant une boucle thermodynamique de climatisation principale comprenant, au moins, un compresseur, un condenseur, un organe de détente, un évaporateur, un échangeur de chaleur à stockage de froid, apte à stocker du froid lors du fonctionnement du compresseur, une boucle thermodynamique de climatisation secondaire intégrant l'échangeur de chaleur à stockage de froid et destinée à refroidir l'évaporateur lorsque le compresseur est hors fonctionnement.

La boucle de climatisation secondaire comprend une branche de circulation de fluide disposée en parallèle sur une section commune avec la boucle thermodynamique de climatisation principale incluant au moins l'évaporateur, la branche de circulation de fluide comprenant un élément de production de froid apte à refroidir le fluide réfrigérant à destination de l'évaporateur.

Ainsi, la boucle secondaire de l'installation de chauffage, ventilation et/ou climatisation selon l'invention ne comprend qu'une seule branche au lieu de deux comme dans le cas de la demande de brevet français précitée.

Selon un premier mode de réalisation, l'élément de production de froid est constitué par l'échangeur de chaleur à stockage de froid.

Dans ce mode de réalisation, l'échangeur de chaleur à stockage de froid joue le rôle de point froid destiné à refroidir le fluide réfrigérant avant qu'il ne pénètre dans l'évaporateur. Pour ce faire, la branche de circulation de fluide comporte une pompe de circulation de fluide réfrigérant.

Avantageusement, la branche de circulation de fluide comporte un détendeur de fluide réfrigérant disposé en amont de l'échangeur de chaleur à stockage de froid et un dispositif de contournement du détendeur. On réalise ainsi un sous-refroidissement du matériau à changement de phase permettant d'améliorer les temps de stockage.

La boucle thermodynamique de climatisation secondaire comporte, un dispositif de commutation, notamment réalisé sous la forme d'une vanne 'trois-voies', ayant au moins une première position dans laquelle le dispositif de commutation autorise le passage du fluide réfrigérant à travers le détendeur disposé en amont de l'échangeur de chaleur à stockage de froid et interdit le passage du fluide réfrigérant dans la branche de contournement du détendeur, et une deuxième position dans laquelle le dispositif de commutation interdit le passage du fluide réfrigérant à travers le détendeur et autorise le passage du fluide réfrigérant dans la branche de contournement du détendeur.

De manière à assurer la circulation du fluide réfrigérant dans la branche de circulation de fluide de la boucle secondaire, l'invention prévoit que l'organe de détente de la boucle principale de climatisation puisse être un éjecteur dont une entrée basse pression est reliée à la branche de circulation de fluide.

Selon un deuxième mode de réalisation, l'élément de production de froid est constitué par un détendeur secondaire. La boucle thermodynamique de climatisation secondaire comprend alors un compresseur secondaire.

La section commune aux boucles thermodynamiques de climatisation principale et secondaire peut comprendre, outre l'évaporateur, le compresseur secondaire et l'échangeur de chaleur à stockage de froid.

La boucle thermodynamique de climatisation secondaire comporte un dispositif de commutation, notamment réalisé sous la forme d'une vanne 'trois-voies', ayant au moins une première position dans laquelle le dispositif de commutation autorise le passage du fluide réfrigérant à travers le compresseur secondaire disposé en amont de l'échangeur de chaleur à stockage de froid et interdit le passage du fluide réfrigérant dans une branche de contournement du compresseur secondaire, et une deuxième position dans laquelle le dispositif de commutation interdit le passage du fluide réfrigérant à travers le compresseur secondaire et autorise le passage du fluide réfrigérant dans la branche de contournement du compresseur secondaire.

Dans ce mode de réalisation, l'échangeur de chaleur à stockage de froid joue le rôle de condenseur dans la boucle thermodynamique de climatisation secondaire.

Selon la présente invention, la boucle thermodynamique de climatisation secondaire peut comporter un dispositif de contrôle, notamment réalisé sous la forme d'une vanne 'trois-voies', ayant une première positon dans laquelle le dispositif de contrôle permet le stockage de froid dans l'échangeur de chaleur à stockage de froid et une deuxième position dans laquelle le dispositif de contrôle permet le restitution du froid stocké dans l'échangeur de chaleur à stockage de froid.

La présente invention sera mieux comprise à la lecture de la description qui va être faite de variantes de réalisation en relation avec les figures des planches annexées, données à titre d'exemples non limitatifs, dans lesquelles :
- la figure 1a est un schéma d'un premier mode de réalisation d'une installation de chauffage, ventilation et/ou climatisation conforme à l'invention fonctionnant lorsque le compresseur est en fonctionnement,
- la figure 1b est un schéma du premier mode de réalisation du installation de chauffage, ventilation et/ou climatisation de la figure 1a fonctionnant lorsque le compresseur est à l'arrêt,
- la figure 2a est un schéma d'un second mode de réalisation d'une installation de chauffage, ventilation et/ou climatisation conforme à l'invention fonctionnant lorsque le compresseur est en fonctionnement, et
- la figure 2b est un schéma du second mode de réalisation du installation de chauffage, ventilation et/ou climatisation de la figure 2a fonctionnant lorsque le compresseur est à l'arrêt.

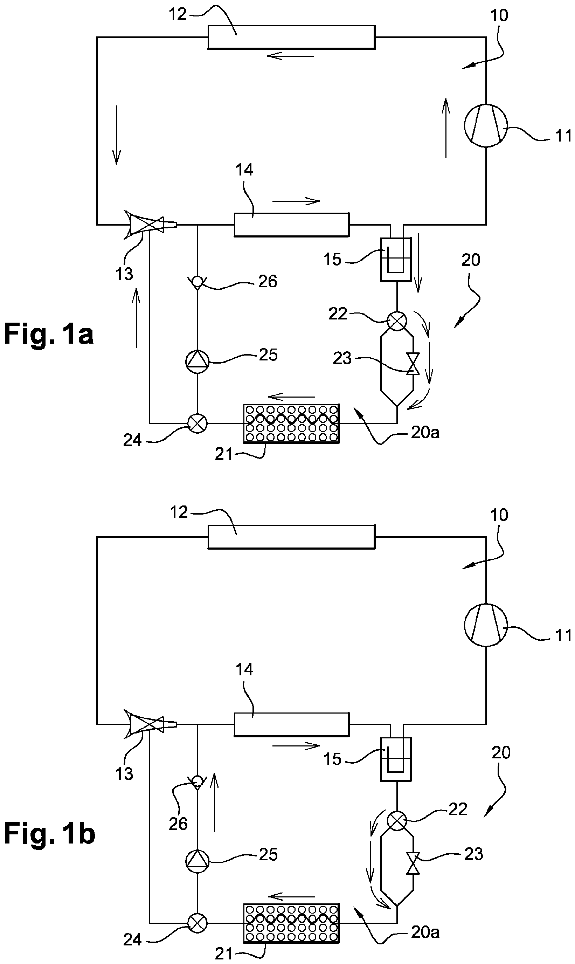

Les figures 1a et 1b présentent une installation de chauffage, ventilation et/ou climatisation selon un premier mode de réalisation comprenant une boucle thermodynamique de climatisation principale 10 comportant, dans le sens de circulation du fluide réfrigérant, un compresseur 11, un condenseur 12, un organe détente 13, un évaporateur 14 et une bouteille 15.

Le compresseur 11 est entraîné par le moteur thermique, non représenté, d'un véhicule automobile. Le fluide réfrigérant, par exemple du R134a, est amené par le compresseur 11 en phase gazeuse à haute pression et à haute température. Le fluide réfrigérant subit ensuite un changement de phase à la traversée du condenseur 12 et échange des calories avec l'air ambiant venant de la face avant du véhicule, pulsé ou non, afin d'être refroidi. En sortie du condenseur 12, le fluide réfrigérant se trouve alors en phase liquide sous haute pression.

La pression et la température du fluide réfrigérant sous forme liquide sont abaissées au passage de l'organe de détendeur 13, tel qu'un détendeur ou, comme dans l'exemple des figures 1a et 1b, un éjecteur. Par suite, la température du fluide réfrigérant est abaissée à la traversée de l'évaporateur 14. L'évaporateur 14 est traversé par un flux d'air apte à être distribué dans un habitacle du véhicule automobile.

Les phases liquide et gazeuse de fluide réfrigérant sortant de l'évaporateur 14 sont séparées par la bouteille 15, la phase gazeuse étant retournée au compresseur 11 pour y être à nouveau comprimée, tandis que la phase liquide pénètre dans une boucle de stockage 20 destinée à emmagasiner du froid dans un échangeur de chaleur de stockage 21 apte à stocker le froid.

Le froid stocké dans l'échangeur de chaleur de stockage 21 sera ultérieurement restitué au fluide réfrigérant de manière à prolonger la fonction de climatisation dans l'habitacle du véhicule après que le compresseur 11 ait été arrêté à la suite d'un arrêt du moteur thermique.

La figure 1a présente un premier mode de réalisation du installation de chauffage, ventilation et/ou climatisation dans lequel le compresseur 11 est en fonctionnement.

Les phases liquide et gazeuse de fluide réfrigérant sortant de l'évaporateur 14 sont séparées par la bouteille 15, la phase gazeuse étant retournée au compresseur 11 pour y être à nouveau comprimée, tandis que la phase liquide pénètre dans une boucle de stockage 20 destinée à emmagasiner du froid dans un échangeur de chaleur de stockage 21 apte à stocker le froid.

Depuis la bouteille 15, le fluide réfrigérant en phase liquide sous basse pression est dirigé par une première vanne 'trois-voies' 22 dans la boucle de stockage 20.

La boucle de stockage 20 est constituée en outre par une boucle thermodynamique de climatisation secondaire 20a. La boucle de stockage 20 comporte, dans le sens de circulation du fluide réfrigérant, un détendeur 23, un échangeur de chaleur à stockage 21, une deuxième vanne 'trois-voies' 24, une pompe électrique de circulation 25 et un clapet anti-retour 26.

La boucle thermodynamique de climatisation secondaire 20a est en particulier constituée par l'échangeur de chaleur à stockage 21, la deuxième vanne 'trois-voies' 24, la pompe électrique de circulation 25 et le clapet anti-retour 26.

La boucle thermodynamique de climatisation secondaire 20a constitue donc une branche de circulation de fluide disposée en parallèle sur une section commune avec la boucle thermodynamique principale de climatisation 10. La boucle thermodynamique de climatisation secondaire 20a et la boucle thermodynamique principale de climatisation 10 ont au moins en commun l'évaporateur 14. Selon l'exemple de réalisation des figures 1a et 1b, les boucles thermodynamique principale de climatisation 10 et thermodynamique de climatisation secondaire 20a comportent également la bouteille 15 en commun.

Les boucles thermodynamiques de climatisation principale 10 et secondaire 20a peuvent être isolées l'une de l'autre au moyen de la deuxième vanne 'trois-voies' 24.

La première vanne 'trois-voies' 22 est en liaison avec l'échangeur de chaleur à stockage 21 par deux branches de circulation disposées en parallèle. Une des branches de circulation comporte le détendeur 23 et l'autre branche constitue une branche de contournement du détendeur 23.

La première vanne 'trois-voies' 22 constitue un dispositif de commutation entre la branche de circulation comportant le détendeur 23 et la branche de contournement du détendeur 23.

Dans ce premier mode de fonctionnement du premier mode de réalisation, tel que présenté en figure 1a, la première vanne 'trois-voies' 22 occupe une première position dans laquelle elle ouvre la circulation du fluide réfrigérant depuis la bouteille 15 vers le l'échangeur de chaleur à stockage 21 via le détendeur 23 et la branche de circulation appropriée. La première position est également telle que la vanne 'trois-voies' 22 ferme la branche de contournement du détendeur 23.

Le détendeur 23 fonctionne comme un deuxième étage de pression vis-à-vis du fluide réfrigérant dont la température est abaissée à une valeur compatible avec la température de solidification du matériau à changement de phase (PCM) de l'échangeur de chaleur à stockage 21 de froid.

Après avoir traversé le détendeur 23, le fluide réfrigérant entre dans l'échangeur de chaleur à stockage 21 de froid. Lors de cette traversée, le fluide réfrigérant est à une température permettant au fluide à changement de pahse (PCM) de changer de phase et de capter des calories au fluide réfrigérant. Cette étape constitue la phase de stockage de froid dans l'échangeur de chaleur à stockage 21 de froid.

Après avoir traversé l'échangeur de chaleur à stockage 21 de froid et solidifié le matériau à changement de phase contenu dans l'échangeur de chaleur à stockage 21 de froid, le fluide réfrigérant est ramené par l'intermédiaire de la deuxième vanne 'trois-voies' 24, disposée dans une première position, depuis l'échangeur de chaleur à stockage 21 de froid à une entrée basse pression de l'organe de détente 13.

L'organe de détente 13 selon l'exemple de réalisation des figures 1a et 1b est un éjecteur. L'éjecteur assure ainsi la circulation du fluide réfrigérant dans la boucle de stockage 20.

La figure 1b présente le premier mode de réalisation du installation de chauffage, ventilation et/ou climatisation dans lequel le compresseur 11 n'est pas en fonctionnement. Dans cet état, le compresseur 11 n'est plus entraîné par le moteur thermique du véhicule.

Le confort de l'habitacle du véhicule est maintenue par la boucle de stockage 20 et plus particulièrement par une configuration adaptée de la boucle de stockage 20 qui constitue la boucle thermodynamique de climatisation secondaire 20a dont le fonctionnement va être décrit en référence à la figure 1b.

La boucle thermodynamique de climatisation secondaire 20a est défini par la mise dans des deuxièmes positions des première et deuxième vannes 'trois-voies' 22 et 24.

La boucle thermodynamique de climatisation secondaire 20a comporte une branche de circulation de fluide disposée en parallèle sur une section commune avec la boucle thermodynamique de climatisation principale 10. Cette section commune est constituée, notamment, selon l'exemple de réalisation, par l'évaporateur 14.

Dans ce deuxième mode de fonctionnement du premier mode de réalisation, tel que présenté en figure 1b, la boucle thermodynamique de climatisation secondaire 20a est telle que la première vanne 'trois-voies' 22 interdit le passage du fluide réfrigérant depuis la bouteille 15 vers le détendeur 23. La première vanne 'trois-voies' 22 occupe donc une deuxième position dans laquelle elle ouvre la circulation du fluide réfrigérant depuis la bouteille 15 vers le l'échangeur de chaleur à stockage 21 via la branche de contournement du détendeur 23 et ferme la branche de circulation dans laquelle est disposée le détendeur 23.

Par ailleurs, La boucle thermodynamique de climatisation secondaire 20a est telle que la deuxième vanne 'trois-voies' 24 interdit le passage du fluide réfrigérant depuis l'échangeur de chaleur à stockage 21 de froid vers l'entrée basse pression de l'organe de détente 13. La deuxième vanne 'trois-voies' 24 occupe donc une deuxième position dans laquelle elle ouvre la circulation du fluide réfrigérant l'échangeur de chaleur à stockage 21 de froid vers l'évaporateur 14 par l'intermédiaire la pompe électrique de circulation 25 et du clapet anti-retour 26.

En fonctionnement de la boucle thermodynamique de climatisation secondaire 20a, le détendeur 23 est contourné par la première vanne 'trois-voies 22 de sorte que la branche de circulation de fluide est essentiellement constituée par l'échangeur de chaleur à stockage 21 de froid mis en communication avec la pompe électrique de circulation 25 par la deuxième vanne 'trois-voies' 24. Le clapet anti-retour 26 est disposé en sortie de la pompe électrique de circulation 25.

Ainsi, lorsque le compresseur 11 est hors fonctionnement, l'échangeur de chaleur à stockage 21 de froid est utilisé comme point froid pour refroidir le fluide réfrigérant circulant dans la boucle thermodynamique de climatisation secondaire 20a. L'échangeur de chaleur à stockage 21 de froid fonctionne donc comme un élément de production de froid apte à refroidir le fluide réfrigérant à destination de l'évaporateur 14. Ainsi, il est permis à l'évaporateur 14 de continuer pendant un certain temps à assurer sa fonction de refroidissement du flux d'air entrant dans l'habitacle du véhicule et maintenir ainsi le confort des passagers.

Dans ce premier mode de réalisation, la deuxième vanne 'trois-voies' 24 constitue un dispositif de contrôle ayant une première positon dans laquelle la deuxième vanne 'trois-voies' 24 permet le stockage de froid dans l'échangeur de chaleur à stockage 21 de froid et une deuxième position dans laquelle la deuxième vanne 'trois-voies' 24 permet le restitution du froid stocké dans l'échangeur de chaleur à stockage 21 de froid.

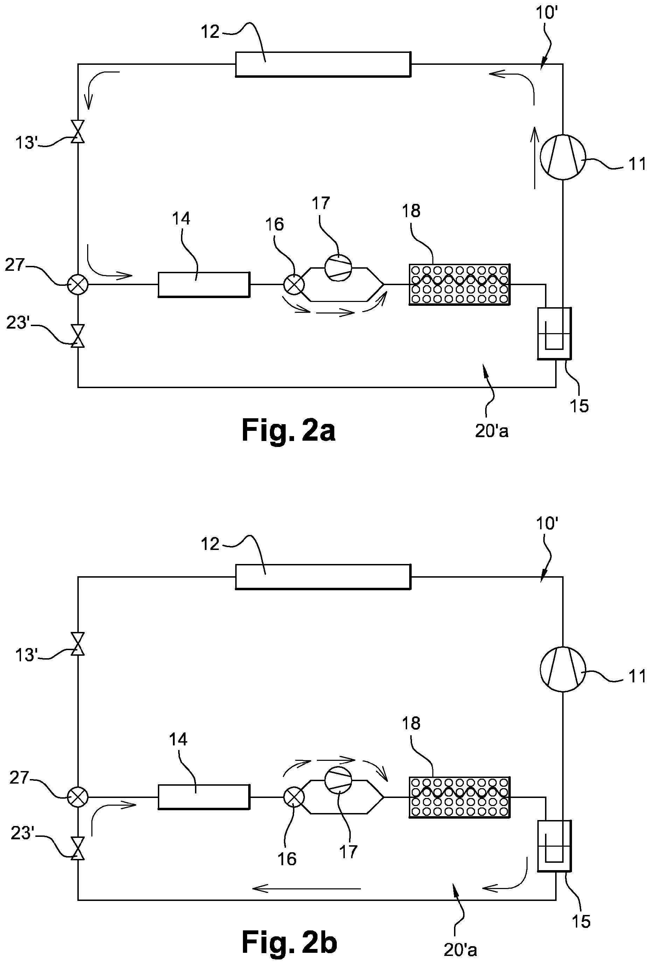

Les figures 2a et 2b présentent une installation de chauffage, ventilation et/ou climatisation selon un deuxième mode de réalisation comprenant une boucle thermodynamique de climatisation principale 10' comportant, dans le sens de circulation du fluide réfrigérant, un compresseur 11, un condenseur 12, un organe détente 13', un évaporateur 14 et une bouteille 15.

La boucle thermodynamique de climatisation principale 10' comprend donc les composants classiques d'une installation de chauffage, ventilation et/ou climatisation.

Dans l'exemple décrit de ce deuxième mode de réalisation, l'organe de détente 13' est constitué par un détendeur, en particulier un détendeur thermostatique.

La boucle thermodynamique de climatisation principale 10' comprend également, dans le sens de circulation du fluide réfrigérant et disposés entre l'évaporateur 14 et la bouteille 15, dans le sens de circulation du fluide réfrigérant, une troisième vanne 'trois-voies' 16, un compresseur secondaire électrique 17 et un échangeur de chaleur à stockage 18 de froid.

L'échangeur de chaleur à stockage 18 de froid de l'exemple de réalisation des figures 2a et 2b est similaire à l'échangeur de chaleur à stockage 21 des figures 1a et 1b. En conséquence, les caractéristiques de l'échangeur de chaleur à stockage 21 seront, sauf indications contraires, également celles de l'échangeur de chaleur à stockage 18.

La troisième vanne 'trois-voies' 16 est en liaison avec l'échangeur de chaleur à stockage 18 par deux branches de circulation disposées en parallèle. Une des branches de circulation comporte le compresseur secondaire électrique 17 et l'autre branche constitue une branche de contournement du compresseur secondaire électrique 17. De façon particulièrement avantageuse le compresseur secondaire électrique 17 est à faible cylindrée.

La troisième vanne 'trois-voies' 16 constitue un dispositif de commutation entre la branche de circulation comportant le compresseur secondaire électrique 17 et la branche de contournement du compresseur secondaire électrique 17.

De plus, une quatrième vanne 'trois-voies' 27 est disposée entre l'organe de détente 13' et l'évaporateur 14.

L'installation de chauffage, ventilation et/ou climatisation des figures 2a et 2b comporte en outre une boucle thermodynamique de climatisation secondaire 20'a.

La boucle thermodynamique de climatisation secondaire 20'a est constituée par une branche de circulation du fluide réfrigérant allant de la bouteille 15 à la quatrième vanne 'trois-voies' 27. En amont de la quatrième vanne 'trois-voies' 27, la boucle thermodynamique de climatisation secondaire 20'a comporte un détendeur secondaire 23', en particulier un détendeur thermostatique.
• La boucle thermodynamique de climatisation secondaire 20'a est disposée en parallèle sur une section commune avec la boucle thermodynamique principale de climatisation 10'.

La boucle thermodynamique de climatisation secondaire 20'a et la boucle thermodynamique de climatisation principale 10' sont disposées en parallèle l'une par rapport à l'autre. Elles comportent toutefois une section commune la portion de boucle incluant l'évaporateur 14 et l'échangeur de chaleur à stockage 18 de froid.

La boucle thermodynamique de climatisation secondaire 20'a est également constituée par la quatrième vanne 'trois-voies' 27, l'évaporateur 14, la troisième vanne 'trois-voies' 16, le compresseur secondaire électrique 17, et l'échangeur de chaleur à stockage 18 de froid.

Les boucles thermodynamiques de climatisation principale 10' et secondaire 20'a peuvent être isolées l'une de l'autre au moyen de la quatrième vanne 'trois-voies' 27.

Un premier mode de fonctionnement du deuxième mode de réalisation, tel que présenté en figure 2a, est tel que le compresseur 11 fonctionne. Le confort de l'habitacle est assuré de façon classique par la boucle thermodynamique de climatisation principale 10'.

Dans ce mode de fonctionnement, la troisième vanne 'trois-voies' 16 occupe une première position dans laquelle elle ouvre la circulation du fluide réfrigérant depuis l'évaporateur 14 vers le l'échangeur de chaleur à stockage 18 via la branche de contournement du compresseur secondaire 17. La première position de la troisième vanne 'trois-voies' 16 est également telle que la troisième vanne 'trois-voies' 16 ferme la branche de circulation dans laquelle est disposé le compresseur secondaire 17.

Par ailleurs, la quatrième vanne 'trois-voies' 27 occupe une première position dans laquelle elle ouvre la circulation du fluide réfrigérant depuis le détendeur 13' vers l'évaporateur 14. La première position de la quatrième vanne 'trois-voies' 27 est également telle que la quatrième vanne 'trois-voies' 27 ferme la boucle thermodynamique de climatisation secondaire 20'a.

Tel qu'illustré sur la figure 2a, le matériau à changement de phase de l'échangeur de chaleur à stockage 18 de froid se refroidit au contact du fluide réfrigérant sortant de l'évaporateur 14 et stocke du froid qui sera utilisé ultérieurement en cas d'arrêt du compresseur 11.

Un deuxième mode de fonctionnement du deuxième mode de réalisation, selon la disposition de la figure 2b, est tel que le compresseur 11 ne fonctionne pas. Le confort de l'habitacle est alors assuré par la boucle thermodynamique de climatisation secondaire 20'a, conformément au schéma de fonctionnement illustré sur la figure 2b.

Dans ce mode de fonctionnement, la troisième vanne 'trois-voies' 16 est mise dans une deuxième position dans laquelle elle interdit le passage direct du fluide réfrigérant depuis l'évaporateur 14 vers l'échangeur de chaleur à stockage 18 de froid. La troisième vanne 'trois-voies' 16 occupe donc la deuxième position dans laquelle elle ouvre la circulation du fluide réfrigérant depuis l'évaporateur 14 vers l'échangeur de chaleur à stockage 18 de froid via la branche comportant le compresseur secondaire 17. Le compresseur secondaire 17 est alors mis en marche.

De plus, la quatrième vanne 'trois-voies' 27 est mise dans une deuxième position dans laquelle elle interdit la circulation du fluide réfrigérant depuis le détendeur 13' vers l'évaporateur 14. La deuxième position de la quatrième vanne 'trois-voies' 27 est également telle que la quatrième vanne 'trois-voies' 27 ouvre la boucle thermodynamique de climatisation secondaire 20'a. Elle permet donc la circulation du fluide réfrigérant entre le détendeur secondaire 23' et l'évaporateur 14.

La boucle thermodynamique de climatisation secondaire 20'a fonctionne alors comme une boucle thermodynamique de climatisation classique. Dans cette configuration, l'échangeur de chaleur à stockage 18 de froid joue le rôle de condenseur vis-à-vis du fluide réfrigérant sortant du compresseur secondaire 17. Le fluide réfrigérant en phase liquide provenant de l'échangeur de chaleur à stockage 18 de froid est détendu et refroidi par le détendeur secondaire 23' avant de pénétrer dans l'évaporateur 14. Le détendeur secondaire 23' fonctionne donc comme un élément de production de froid apte à refroidir le fluide réfrigérant à destination de l'évaporateur 14. L'efficacité de climatisation de la boucle thermodynamique de climatisation secondaire 20'a est limitée par la quantité de froid emmagasinée dans l'échangeur de chaleur à stockage 18 de froid.

Dans ce deuxième mode de réalisation, la quatrième vanne 'trois-voies' 27 constitue un dispositif de contrôle ayant une première positon dans laquelle la quatrième vanne 'trois-voies' 27 permet le stockage de froid dans l'échangeur de chaleur à stockage 18 de froid et une deuxième position dans laquelle la quatrième vanne 'trois-voies' 27 permet le restitution du froid stocké dans l'échangeur de chaleur à stockage 18 de froid.

La présente invention et les exemples de réalisations décrits précédemment emploient un fluide réfrigérant. Le fluide réfrigérant peut être un composé fluoré, en particulier du R134a, ou tous autres fluides alternatifs, naturels ou chimiques, notamment le dioxyde de carbone.

Bien évidemment, l'invention n'est pas limitée aux modes de réalisation décrits précédemment et fournis uniquement à titre d'exemple et englobe d'autres variantes que pourra envisager l'homme du métier dans le cadre des revendications.

## Revendications

1. Installation de chauffage, ventilation et/ou climatisation ayant :
- une boucle thermodynamique de climatisation principale (10 ; 10') pour la circulation d'un fluide réfrigérant comprenant, au moins, un compresseur (11), un condenseur (12), un organe de détente (13 ; 13') et un évaporateur (14),
- un échangeur de chaleur à stockage (21 ; 18) de froid, apte à stocker du froid lors du fonctionnement du compresseur (11),
- une boucle thermodynamique de climatisation secondaire (20a ; 20'a) intégrant l'échangeur de chaleur à stockage (21 ; 18) de froid, la boucle thermodynamique secondaire de climatisation (20a ; 20'a) étant destinée à refroidir l'évaporateur (14) lorsque le compresseur (11) est hors fonctionnement,
la boucle thermodynamique de climatisation secondaire (20a ; 20'a) comprenant une branche de circulation de fluide disposée en parallèle d'une section commune avec la boucle thermodynamique de climatisation principale (10 ; 10') incluant au moins l'évaporateur (14), la branche de circulation de fluide comprenant un élément de production (21 ; 23') de froid apte à refroidir le fluide réfrigérant à destination de l'évaporateur (14),
la boucle thermodynamique de climatisation secondaire (20a ; 20'a) comprenant un dispositif de commutation (16, 22) relié à l'échangeur de chaleur à stockage (21, 18) par deux branches de circulation disposées en parallèle, installation comprenant en outre l'une des deux alternatives suivantes :
- dans un premier mode de réalisation, l'élément de production de froid est constitué par l'échangeur de chaleur à stockage (21) de froid et le dispositif de commutation (22) a au moins une première position dans laquelle le dispositif de commutation (22) autorise le passage du fluide réfrigérant à travers un détendeur (23) disposé en amont de l'échangeur de chaleur à stockage (21) de froid et interdit le passage du fluide réfrigérant dans une branche de contournement du détendeur (23),
et une deuxième position dans laquelle le dispositif de commutation (22) interdit le passage du fluide réfrigérant à travers le détendeur (23) et autorise le passage du fluide réfrigérant dans la branche de contournement du détendeur (23),
la boucle thermodynamique de circulation secondaire (20a) comprenant alors une pompe de circulation (25) de fluide réfrigérant, ou
- dans un deuxième mode de réalisation, l'élément de production de froid est constitué par un détendeur secondaire (23'), la boucle thermodynamique de climatisation secondaire (20'a) comprend un compresseur secondaire (17), et
le dispositif de commutation (16) a au moins une première position dans laquelle le dispositif de commutation (16) autorise le passage du fluide réfrigérant à travers compresseur secondaire (17) disposé en amont de l'échangeur de chaleur à stockage (18) de froid et interdit le passage du fluide réfrigérant dans une branche de contournement du compresseur secondaire (17), et une deuxième position dans laquelle le dispositif de commutation (16) interdit le passage du fluide réfrigérant à travers le compresseur secondaire (17) et autorise le passage du fluide réfrigérant dans la branche de contournement du compresseur secondaire (17),
l'échangeur de chaleur à stockage de froid étant apte à jouer le rôle de condenseur dans la boucle thermodynamique de climatisation secondaire (20'a) quand le dispositif de commutation est dans sa première position, le fluide réfrigérant étant alors détendu et refroidi par le détendeur secondaire (23') avant de pénétrer dans l'évaporateur (14).

2. Installation selon la revendication 1 dans laquelle le dispositif de commutation est une vanne 'trois-voies' (16, 22).

3. Installation selon l'une quelconque des revendications 1 à 2 dans laquelle dans le premier mode de réalisation l'organe de détente de la boucle de climatisation principale est un éjecteur (13).

4. Installation selon la revendication 3, dans lequel la branche de circulation de fluide est reliée à une entrée basse pression de l'éjecteur (13).

5. Installation selon l'une des revendications précédentes, dans laquelle la boucle thermodynamique de climatisation secondaire (20a ; 20'a) comporte un dispositif de contrôle (24, 27) ayant une première positon dans laquelle le dispositif de contrôle (24, 27) permet le stockage de froid dans l'échangeur de chaleur à stockage (21, 18) de froid et une deuxième position dans laquelle le dispositif de contrôle (24, 27) permet le restitution du froid stocké dans l'échangeur de chaleur à stockage (21, 18) de froid.

6. Installation selon la revendication 5, dans laquelle le dispositif de contrôle est une vanne 'trois-voies' (24, 27).

## Patentansprüche

1. Anlage zur Beheizung, Belüftung und/oder Klimatisierung, welche aufweist:
- eine thermodynamische Klimatisierungs-Hauptschleife (10; 10') für die Zirkulation eines Kältemittels, die wenigstens einen Kompressor (11), einen Kondensator (12), ein Entspannungsorgan (13; 13') und einen Verdampfer (14) umfasst;
- einen Wärmetauscher zur Kältespeicherung (21; 18), der in der Lage ist, während des Betriebs des Kompressors (11) Kälte zu speichern,
- eine thermodynamische Klimatisierungs-Sekundärschleife (20a; 20'a), in die der Wärmetauscher zur Kältespeicherung (21; 18) integriert ist, wobei die thermodynamische Klimatisierungs-Sekundärschleife (20a; 20'a) dazu bestimmt ist, den Verdampfer (14) zu kühlen, wenn der Kompressor (11) nicht in Betrieb ist,
wobei die thermodynamische Klimatisierungs-Sekundärschleife (20a; 20'a) einen Fluidzirkulationsstrang umfasst, der parallel zu einem gemeinsamen Abschnitt mit der thermodynamischen Klimatisierungs-Hauptschleife (10; 10') angeordnet ist, der wenigstens den Verdampfer (14) enthält, wobei der Fluidzirkulationsstrang ein Kälteerzeugungselement (21; 23') umfasst, das in der Lage ist, das in Richtung des Verdampfers (14) strömende Kältemittel zu kühlen,
wobei die thermodynamische Klimatisierungs-Sekundärschleife (20a; 20'a) eine Umschaltvorrichtung (16, 22) umfasst, die mit dem Wärmetauscher zur Speicherung (21, 18) über zwei parallel angeordnete Zirkulationsstränge verbunden ist,
wobei die Anlage außerdem eine der folgenden zwei Alternativen umfasst:
- bei einer ersten Ausführungsform besteht das Kälteerzeugungselement aus dem Wärmetauscher zur Kältespeicherung (21), und die Umschaltvorrichtung (22) weist wenigstens eine erste Position auf, in welcher die Umschaltvorrichtung (22) den Durchfluss des Kältemittels durch ein Expansionsventil (23) ermöglicht, das stromaufwärts des Wärmetauschers zur Kältespeicherung (21) angeordnet ist, und den Durchfluss des Kältemittels in einem Umgehungszweig um das Expansionsventil (23) verhindert,
und eine zweite Position, in welcher die Umschaltvorrichtung (22) den Durchfluss des Kältemittels durch ein Expansionsventil (23) verhindert und den Durchfluss des Kältemittels in dem Umgehungszweig um das Expansionsventil (23) ermöglicht,
wobei die thermodynamische Zirkulations-Sekundärschleife (20a) dann eine Umwälzpumpe (25) für das Kältemittel umfasst,
oder
- bei einer zweiten Ausführungsform besteht das Kälteerzeugungselement aus einem sekundären Expansionsventil (23'), die thermodynamische Klimatisierungs-Sekundärschleife (20'a) umfasst einen sekundären Kompressor (17), und
die Umschaltvorrichtung (16) weist wenigstens eine erste Position auf, in welcher die Umschaltvorrichtung (16) den Durchfluss des Kältemittels durch den sekundären Kompressor (17) ermöglicht, der stromaufwärts des Wärmetauschers zur Kältespeicherung (18) angeordnet ist, und den Durchfluss des Kältemittels in einem Umgehungszweig um den sekundären Kompressor (17) verhindert, und eine zweite Position, in welcher die Umschaltvorrichtung (16) den Durchfluss des Kältemittels durch den sekundären Kompressor (17) verhindert und den Durchfluss des Kältemittels in dem Umgehungszweig um den sekundären Kompressor (17) ermöglicht,
wobei der Wärmetauscher zur Kältespeicherung in der Lage ist, die Rolle eines Kondensators in der thermodynamischen Klimatisierungs-Sekundärschleife (20'a) zu spielen, wenn sich die Umschaltvorrichtung in ihrer ersten Position befindet, wobei das Kältemittel dann durch das sekundäre Expansionsventil (23') entspannt und abgekühlt wird, bevor es in den Verdampfer (14) einströmt.

2. Anlage nach Anspruch 1, wobei die Umschaltvorrichtung ein Dreiwegeventil (16, 22) ist.

3. Anlage nach einem der Ansprüche 1 bis 2, wobei bei der ersten Ausführungsform das Entspannungsorgan der Klimatisierungs-Hauptschleife ein Ejektor (13) ist.

4. Anlage nach Anspruch 3, wobei der Fluidzirkulationsstrang mit einem Niederdruckeingang des Ejektors (13) verbunden ist.

5. Anlage nach einem der vorhergehenden Ansprüche, wobei die thermodynamische Klimatisierungs-Sekundärschleife (20a; 20'a) eine Steuervorrichtung (24, 27) umfasst, die eine erste Position aufweist, in welcher die Steuervorrichtung (24, 27) die Speicherung von Kälte in dem Wärmetauscher zur Kältespeicherung (21, 18) ermöglicht, und eine zweite Position, in welcher die Steuervorrichtung (24, 27) die Abgabe der in dem Wärmetauscher zur Kältespeicherung (21, 18) gespeicherten Kälte ermöglicht.

6. Anlage nach Anspruch 5, wobei die Steuervorrichtung ein Dreiwegeventil (24, 27) ist.

## Claims

1. Heating, ventilation and/or air - conditioning installation having:
- a main air - conditioning thermodynamic loop (10; 10') for the circulation of a refrigerant fluid comprising, at least, a compressor (11), a condenser (12), an expansion member (13; 13') and an evaporator (14),
- a cold-storage heat exchanger (21; 18) able to store cold during operation of the compressor (11),
- a secondary air - conditioning thermodynamic loop (20a; 20'a) incorporating the cold storage heat exchanger (21; 18), the secondary air - conditioning thermodynamic loop (20a; 20'a) being intended to cool the evaporator (14) when the compressor (11) is not operating,
the secondary air - conditioning thermodynamic loop (20a; 20'a) comprising a fluid circulation leg arranged in parallel with a section common to the main air - conditioning thermodynamic loop (10; 10') including at least the evaporator (14), the fluid circulation leg comprising a cold-producing element (21; 23') able to cool the refrigerant fluid intended for the evaporator (14),
the secondary air - conditioning thermodynamic loop (20a; 20'a) comprising a switchover device (16, 22) connected to the storage heat exchanger (21, 18) by two circulation legs arranged in parallel, the installation further comprising one of the following two alternatives:
- in a first embodiment, the cold-producing element consists of the cold storage heat exchanger (21) and the switchover device (22) has at least a first position in which the switchover device (22) allows the refrigerant to pass through an expansion device (23) positioned upstream of the cold storage heat exchanger (21) and prevents the refrigerant fluid from passing into a bypass leg that bypasses the expansion device (23),
and a second position in which the switchover device (22) prevents the refrigerant fluid from passing through the expansion device (23) and allows the refrigerant fluid to pass into the bypass leg bypassing the expansion device (23),
the secondary air - conditioning thermodynamic loop (20a) then comprising a circulation pump (25) for circulating the refrigerant fluid,
or
- in a second embodiment, the cold-producing element consists of a secondary expansion device (23'), the secondary air - conditioning thermodynamic loop (20'a) comprises a secondary compressor (17), and the switchover device (16) has at least a first position in which the switchover device (16) allows the refrigerant fluid to pass through the secondary compressor (17) positioned upstream of the cold storage heat exchanger (18) and prevents the refrigerant fluid from passing into a bypass leg bypassing the secondary compressor (17), and a second position in which the switchover device (16) prevents the refrigerant fluid from passing through the secondary compressor (17) and allows the refrigerant fluid to pass into the bypass leg bypassing the secondary compressor (17), the cold storage heat exchanger being able to act as a condenser in the secondary air - conditioning thermodynamic loop (20'a) when the switchover device is in its first position, the refrigerant fluid then being expanded and cooled by the secondary expansion device (23') before entering the evaporator (14).

2. Installation according to Claim 1, in which the switchover device is a three-way valve (16, 22).

3. Installation according to either one of Claims 1 and 2, in which in the first embodiment the expansion member of the main air - conditioning loop is an ejector (13).

4. Installation according to Claim 3, in which the fluid circulation leg is connected to a low-pressure inlet of the ejector (13).

5. Installation according to one of the preceding claims, in which the secondary air - conditioning thermodynamic loop (20a; 20'a) comprises a control device (24, 27) having a first position in which the control device (24, 27) allows cold to be stored in the cold storage heat exchanger (21, 18), and a second position in which the control device (24, 27) allows the cold stored in the cold storage heat exchanger (21, 18) to be released.

6. Installation according to Claim 5, in which the control device is a three-way valve (24, 27).
